# EUROPÄISCHE PATENTSCHRIFT

(11) **EP 4 051 523 B1**
(45) Veröffentlichungstag und Bekanntmachung des Hinweises auf die Patenterteilung: **06.12.2023**
(21) Anmeldenummer: 20799977.2
(22) Anmeldetag: 06.10.2020
(51) Int. Cl.: B60K 6/36, B60K 6/40, B60K 6/442, F16D 23/06

(54) **SCHALTEINRICHTUNG FÜR EIN HYBRIDES ANTRIEBSSYSTEM EINES KRAFTFAHRZEUGES; ANTRIEBSSYSTEM SOWIE KRAFTFAHRZEUG**
SELECTOR DEVICE FOR A HYBRID DRIVE SYSTEM OF A MOTOR VEHICLE, DRIVE SYSTEM, AND MOTOR VEHICLE
DISPOSITIF SÉLECTEUR POUR SYSTÈME DE CONDUITE HYBRIDE D'UN VÉHICULE À MOTEUR, SYSTÈME DE CONDUITE ET VÉHICULE À MOTEUR

(30) Priorität: 29.10.2019 DE 102019129173
(43) Veröffentlichungstag der Anmeldung: 07.09.2022
(73) Patentinhaber: Schaeffler Technologies AG & Co. KG, 91074 Herzogenaurach (DE)
(72) Erfinder: HOPPE, Marcus, 77855 Achern (DE); PIEPER, Torsten, 76356 Weingarten (DE)
(86) Internationale Anmeldenummer: PCT/DE2020/100863
(87) Internationale Veröffentlichungsnummer: WO 2021/083449

(56) Entgegenhaltungen:
- DE-A1-102016 215 268
- DE-A1-102016 220 512
- DE-A1-102018 108 337

## Beschreibung

Die Erfindung betrifft eine Schalteinrichtung für ein hybrides Antriebssystem eines Kraftfahrzeuges. Des Weiteren betrifft die Erfindung das Antriebssystem an sich mit dieser Schalteinrichtung sowie ein Kraftfahrzeug mit dem Antriebssystem, wobei das Antriebssystem vorzugsweise als ein seriell / paralleler Hybridantrieb umgesetzt ist. Das Antriebssystem weist weiterhin auf typische Weise zwei Elektromotoren auf, von denen ein erster Elektromotor hauptsächlich als Generator eingesetzt ist und ein zweiter Elektromotor hauptsächlich als Antriebsmotor eingesetzt ist. Auch weist das Antriebssystem eine Getriebeeinheit auf, die eine Ausgangswelle einer Verbrennungskraftmaschine, die Elektromotoren sowie ein ausgangsseitiges Antriebsteil miteinander in Wirkverbindung setzt.

Gattungsgemäße Antriebssysteme sind aus dem Stand der Technik bereits hinlänglich bekannt. Bspw. offenbart die DE 10 2017 206 510 A1 eine Getriebestruktur für ein serielles / paralleles Hybridfahrzeug. Weitere hybride Antriebsstränge sind bekannt aus den Druckschriften DE 10 2013 223 356 A1 und EP 3 521 084 A1, wobei hier die E-Maschine jeweils über Planetensätze an den Antriebsstrang angeschlossen ist. Des Weiteren ist ein hybrider Antriebsstrang auch aus der DE 101 33 695 B4 bekannt. In dieser Druckschrift sind unterschiedliche Positionen bekannt, an welchen ein E-Motor innerhalb des Getriebes angeordnet sein kann. DE102018108337 wird auch als Stand der Technik angesehen.

Es sind somit bereits Antriebssysteme bekannt, mit denen ein serieller Hybrid umsetzbar ist, wobei ein direkter Durchtrieb der Verbrennungskraftmaschine hin zu den Antriebsrädern / Rädern des Kraftfahrzeuges ausgeführt wird. Bei den aus dem Stand der Technik bekannten Ausführungen treten jedoch häufig zumindest einige der folgenden Nachteile auf. Durch die aus dem Stand der Technik bekannten Antriebssysteme ist die Höchstgeschwindigkeit des Kraftfahrzeuges beschränkt. Das entsprechende Fahrzeug kann deshalb meist nur eine Höchstgeschwindigkeit von ca. 180 km/h umsetzen. Für stärkere Motorisierungen und/oder höhere Fahrzeugklassen sind diese Antriebssysteme kaum geeignet oder gar ungeeignet. Im Weiteren besteht ein Nachteil darin, dass die vorhandene Getriebestruktur des bekannten Antriebssystems bedingt, dass beide Elektromotoren bei Höchstgeschwindigkeit mitdrehen, wenn der Hauptantrieb über die Verbrennungskraftmaschine erfolgt. Daraus folgt, dass die Elektromotoren bei hohen Fahrgeschwindigkeiten relativ hohe Schleppverluste erzeugen. Daraus folgt wiederum, dass bzgl. der Elektromotoren ein Auslegungskompromiss zwischen maximaler Drehzahl und dem maximalen Radmoment zu finden ist. Daraus ergibt sich weiterhin, dass nur ein eingeschränkter Anhängerbetrieb mit dem Fahrzeug möglich ist. Zudem sind die Elektromotoren meist konzeptbedingt mit einer für den seriellen Betrieb ungünstigen Übersetzung an die Verbrennungskraftmaschine gekoppelt. Ein weiterer Nachteil besteht in den bekannten Ausführungen darin, dass die beiden vorderen Elektromotoren meist axial in Reihe nebeneinander angeordnet sind, was bei Front-Quer-Bauweise der Verbrennungskraftmaschine sowie insbesondere bei kleinen Fahrzeugen problematisch ist.

Es ist also die Aufgabe der Erfindung, die Nachteile aus dem Stand der Technik zu vermeiden oder wenigstens zu mildern. Insbesondere soll eine Schalteinheit für ein Hybridgetriebe bereitgestellt werden, welche eine Standladenfunktion und ein direktes Umschalten zwischen einem Rekuperationsmodus und einem rein elektrischen Fahrmodus ermöglicht.

Diese Aufgabe wird erfindungsgemäß durch den Gegenstand des Anspruchs 1 gelöst. Demzufolge ist eine Schalteinrichtung für ein hybrides Antriebssystem eines Kraftfahrzeugs vorgesehen mit einer zentral angeordneten Welle einem relativ zu der Welle verdrehbar gelagerten ersten Zahnrad und einem relativ zu der Welle verdrehbar gelagerten, entlang der Welle versetzt zu dem ersten Zahnrad angeordneten zweiten Zahnrad. Dabei ist jedem Zahnrad eine Schiebehülse zugeordnet, welche Schiebehülsen derart ausgebildet sind, dass sie in einer ersten Verschiebestellung die Welle drehfest / rotatorisch mit dem ersten Zahnrad verbinden, während das zweite Zahnrad rotatorisch von der Welle entkoppelt ist, in einer zweiten Verschiebestellung die Welle sowohl mit dem ersten Zahnrad als auch mit dem zweiten Zahnrad drehfest verbinden, in einer dritten Verschiebestellung die beiden Zahnräder drehfest miteinander verbinden, während die Welle von den beiden Zahnrädern rotatorisch entkoppelt ist und in einer vierten Verschiebestellung die beiden Zahnräder voneinander sowie die Welle von den beiden Zahnrädern rotatorisch entkoppeln.

Die beiden Zahnräder weisen dabei eine Außenverzahnung auf und sind Bestandteil von Stirnradsätzen.

Durch den Einsatz der Schalteinrichtung sind in einer Getriebeeinheit die Übersetzungen der beiden Elektromotoren unabhängig voneinander wählbar. Darüber hinaus ist eine optimierte Kennfeldabstimmung zwischen einer Verbrennungskraftmaschine und einem, hauptsächlich als Generator wirkenden, ersten Elektromotor durch eine separate Zahnradstufe erleichtert. Durch die Schalteinrichtung wird weiterhin eine Einrichtung zur Verfügung gestellt, die es erlaubt, das Kraftfahrzeug deutlich effizienter zu betreiben und eine Vielzahl an unterschiedlichen Betriebsmodi / Fahrbetriebe zu realisieren. Auch kann ein einen Fahrmotor / Antriebsmotor bildender zweiter Elektromotor bei höheren Geschwindigkeiten auf einfache Weise abgeworfen werden, um Schleppverluste zu vermeiden.

Vorteilhafte Ausführungsbeispiele sind in den Unteransprüchen beansprucht und werden nachfolgend näher erläutert.

In einer bevorzugten Ausgestaltung kann jede Schiebehülse jeweils eine, vorzugsweise als Axialverzahnung ausgeführte, Innenverzahnung aufweisen. Vorzugsweise kann dabei zur drehfesten Verbindung der Welle und des ersten Zahnrads eine an einem ersten Übertragungselement, vorzugsweise als Axialverzahnung, ausgebildete Außenverzahnung mit der Innenverzahnung der ersten Schiebehülse in Zahneingriff stehen. Des Weiteren kann zur drehfesten Verbindung des ersten Zahnrads und des zweiten Zahnrads eine an einem zweiten Übertragungselement, vorzugsweise als Axialverzahnung, ausgebildete Außenverzahnung mit der Innenverzahnung der zweiten Schiebehülse in Zahneingriff stehen. Durch die Außen- und Innenverzahnung kann somit eine optional koppelbare und einfach zu fertigende drehfeste Verbindung zwischen den Zahnrädern und der Welle bereitgestellt werden.

Erfindungsgemäß kann zudem jede Schiebehülse eine Rastkontur aufweisen, in welche Rastkontur jeweils ein Rastelement in der jeweiligen Verschiebestellung blockierend eingreift, so dass ein unerwünschtes Koppeln oder Entkoppeln der Zahnräder und der Welle effektiv verhindert wird.

Insbesondere ist es gemäß der Erfindung von Vorteil, wenn zumindest ein, vorzugsweise als Linearmotor ausgeführter, Aktuator über einen Hebelmechanismus auf die Schiebehülsen verschiebend einwirkt. In einer vorteilhaften Weiterbildung kann hierfür jeweils ein Hebelelement des Hebelmechanismus mit einem ersten Ende in eine Aufnahmekontur an der Schiebehülse eingreifen und mit einem dem ersten Ende gegenüberliegenden zweiten Ende durch den zumindest einen Aktuator zum Schwenken beaufschlagbar sein. Zudem ist es dabei denkbar, dass jeder Schiebehülse und jedem Hebelelement ein separater Aktuator zugeordnet ist. Über den Hebelmechanismus wird effektiv eine Linearbewegung des Aktuators in eine Axialverlagerung der Schiebehülsen gewandelt, weshalb als Aktuator ein kostengünstiger Linearmotor verwendet werden kann.

Weiterhin ist es zweckmäßig, wenn das erste Zahnrad in einer axialen Richtung der Welle über ein Axiallager an der Welle abgestützt ist, das zweite Zahnrad in der axialen Richtung über ein weiteres Axiallager an dem ersten Zahnrad und über ein noch weiteres Axiallager an der Welle abgestützt ist. Erfindungsgemäß können die Axiallager dabei als Nadellager ausgeführt sein.

Des Weiteren betrifft die Erfindung ein Antriebssystem für ein hybrides Kraftfahrzeug, wie einen Pkw, einen Lkw, einen Bus oder ein sonstiges Nutzfahrzeug, welches Antriebssystem eine mit einer Ausgangswelle einer Verbrennungskraftmaschine rotatorisch koppelbare oder gekoppelte Motorwelle, einen eine erste Rotorwelle aufweisenden, in einem Hauptbetriebszustand als Generator betriebenen ersten Elektromotor, einen eine radial versetzt zu der ersten Rotorwelle angeordnete zweite Rotorwelle aufweisenden, in dem Hauptbetriebszustand als Antriebsmotor betriebenen zweiten Elektromotor, einen mit der zweiten Rotorwelle rotatorisch verbundenes und mit zumindest einem Rad des Kraftfahrzeuges rotatorisch verbindbares Antriebsteil sowie eine zwischen der Motorwelle, den beiden Rotorwellen und dem Antriebsteil wirkend eingesetzte, schaltbare Getriebeeinheit aufweist. Zudem ist eine einen Betriebsmodus des Antriebssystems steuernde und nach zumindest einer der zuvor beschriebenen Ausführungen ausgebildete erfindungsgemäße Schalteinrichtung zwischen der Motorwelle, einem mit der ersten Rotorwelle permanent rotatorisch gekoppelten ersten Zahnrad und einem mit der zweiten Rotorwelle über eine zusätzliche Planetengetriebestufe permanent rotatorisch gekoppelten zweiten Zahnrad derart wirkend eingesetzt

Dabei ist es zudem von Vorteil, wenn ein Sonnenrad der Planetengetriebestufe unmittelbar mit der zweiten Rotorwelle permanent verbunden ist, ein mehrere Planetenräder lagernder Planetenträger mit einem Zwischenzahnrad, das sich in Zahneingriff mit dem zweiten Zahnrad befindet, verbunden ist und ein Hohlrad mittels einer Bremseinrichtung fahrzeugrahmenfest anordenbar ist. Dadurch ist der zweite Elektromotor geschickt ansteuerbar.

Des Weiteren betrifft die Erfindung ein (Hybrid-)Kraftfahrzeug mit dem Antriebssystem nach zumindest einer der zuvor beschriebenen Ausführungen, wobei das Antriebsteil mit den Rädern des Kraftfahrzeuges rotatorisch gekoppelt ist.

Eine besonders effiziente Bauweise des Kraftfahrzeuges ist gewährleistet, wenn die Verbrennungskraftmaschine mit ihrer Ausgangswelle quer zu einer Fahrzeuglängsachse (des Kraftfahrzeuges) angeordnet ist und/oder der Antriebsteil mit Rädern einer Antriebsachse rotatorisch verbunden ist.

Mit anderen Worten betrifft die Erfindung ein Hybridgetriebe, welches ein Losrad mit zwei halben, axial seitlich (d.h. links und rechts) angeordneten Schaltsystemen aufweist. Insbesondere betrifft die Erfindung dabei die Kombination zweier Losräder mit einem halben Schaltsystem zum Koppeln mit der Welle und einem halben Schaltsystem zum Koppeln mit dem zweiten Losrad. Die Losräder brauchen sowohl Radial-, als auch Axiallager. Dabei sind die Axiallager auch Teil der Erfindung und es werden insbesondere drei axiale Nadellager benötigt.

Die Erfindung wird nachfolgend mit Hilfe von Zeichnungen erläutert. Es zeigen:
- Fig. 1: eine schematische Schnittansicht eines erfindungsgemäßen Antriebssystems nach einem bevorzugten Ausführungsbeispiel, wobei besonders gut der Aufbau einer eine Verbrennungskraftmaschine sowie zwei Elektromotoren mit einem Antriebsabschnitt eines Differentialgetriebes koppelnden Getriebeeinheit zu erkennen ist,
- Fig. 2: eine Längsschnittdarstellung einer nach einem bevorzugten Ausführungsbeispiel umgesetzten, in dem Antriebssystem von Fig. 1 eingesetzten Schalteinrichtung, wobei sich die Schaltstellung der Schalteinrichtung vorgebende Schiebehülsen in einer ersten Verschiebestellung befinden,
- Fig. 3: eine Längsschnittdarstellung der Schalteinrichtung, ähnlich zur Fig. 2, wobei sich die Schiebehülsen in einer im Vergleich zu Fig. 2 geänderten zweiten Verschiebestellung befinden,
- Fig. 4: eine Längsschnittdarstellung der Schalteinrichtung, ähnlich zur Fig. 2, wobei sich die Schiebehülsen in einer im Vergleich zu Fig. 2 geänderten dritten Verschiebestellung befinden,
- Fig. 5: eine Längsschnittdarstellung der Schalteinrichtung, ähnlich zu Fig. 2, wobei die Schiebehülsen eine vierte Verschiebestellung einnehmen, und
- Fig. 6: eine tabellarische Übersicht zwischen verschiedenen, mit der Schalteinrichtung realisierbaren Schaltstellungen und Verbindungen zwischen unterschiedlichen Komponenten der Schalteinrichtung.

Die Figuren sind lediglich schematischer Natur und dienen ausschließlich dem Verständnis der Erfindung. Die gleichen Elemente sind mit denselben Bezugszeichen versehen.

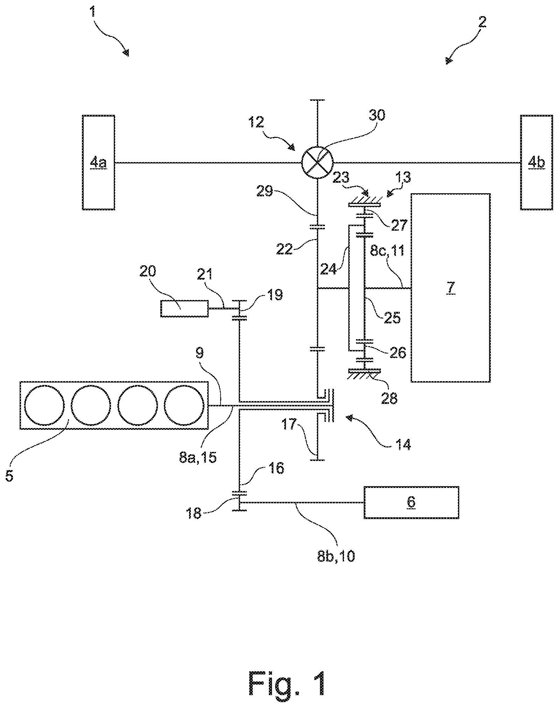

In Fig. 1 ist ein Antriebssystem 1 nach einem bevorzugten Ausführungsbeispiel veranschaulicht. Das Antriebssystem 1 ist in einem hybriden Kraftfahrzeug 2 integriert, welches Kraftfahrzeug mit dem Bezugszeichen 2 angedeutet ist. Insbesondere ist in dieser Ausführung eine Antriebsachse 3 des Kraftfahrzeuges 2 (hier Vorderachse, alternativ auch Hinterachse) mit dargestellt, wobei Räder 4a, 4b der Antriebsachse 3 über verschiedene Maschinen (Verbrennungskraftmaschine 5 sowie Elektromotoren 6, 7) des Antriebssystems 1 antreibbar sind. Eine Verbrennungskraftmaschine 5 des Antriebssystems 1 befindet sich in dieser Ausführung in einer bevorzugten Front-Quer-Anordnung, in der eine Längsachse der Verbrennungskraftmaschine 5, d. h. eine (erste) Drehachse 8a einer Ausgangswelle 9 (Kurbelwelle) der Verbrennungskraftmaschine 5 quer, hier senkrecht, zu einer (Fahrzeug-) Längsachse des Kraftfahrzeuges 2 ausgerichtet ist.

Gemäß der Ausbildung des Antriebssystems 1 als serieller Hybridantrieb, weist das Antriebssystem 1 neben der Verbrennungskraftmaschine 5 auch zwei Elektromotoren 6, 7 auf. Ein erster Elektromotor 6 ist in einem Hauptbetriebszustand als Generator wirkend eingesetzt. Der erste Elektromotor 6 ist jedoch prinzipiell, etwa für ein rein elektrisches Rückwärtsfahren als Antriebsmotor schaltbar. Ein zweiter Elektromotor 7, der eine durch den ersten Elektromotor 6 generierte elektrische Leistung verbraucht, ist als Antriebsmotor / Fahrmotor umgesetzt.

Die beiden Elektromotoren 6, 7 sind mit Drehachsen 8b, 8c ihrer Rotorwellen 10, 11 in radialer Richtung versetzt zueinander angeordnet. Der erste Elektromotor 6 weist eine erste Rotorwelle 10 auf, die um eine (zweite) Drehachse 8b drehbar gelagert ist. Der zweite Elektromotor 7 weist eine zweite Rotorwelle 11 auf, die um eine (dritte) Drehachse 8c drehbar gelagert ist. Der erste Elektromotor 6 ist gesamtheitlich, d.h. auch samt seines hier der Übersichtlichkeit halber nicht dargestellten Stators und seines relativ zu dem Stator drehbar angeordneten Rotor, der mit der ersten Rotorwelle 10 drehfest verbunden ist, in radialer Richtung der zweiten Drehachse 8b versetzt zu dem gesamten zweiten Elektromotor 7 samt dessen Stator und relativ zu dem Stator drehbar angeordneten, mit der zweiten Rotorwelle 11 drehfest verbundenen Rotor angeordnet. Auch sind die beiden Elektromotoren 6, 7 relativ zu der ersten Drehachse 8a der Ausgangswelle 9 der Verbrennungskraftmaschine 5 radial versetzt angeordnet. Entlang der Fahrzeuglängsachse gesehen, befindet sich die erste Drehachse 8a zwischen der zweiten Drehachse 8b und der dritten Drehachse 8c.

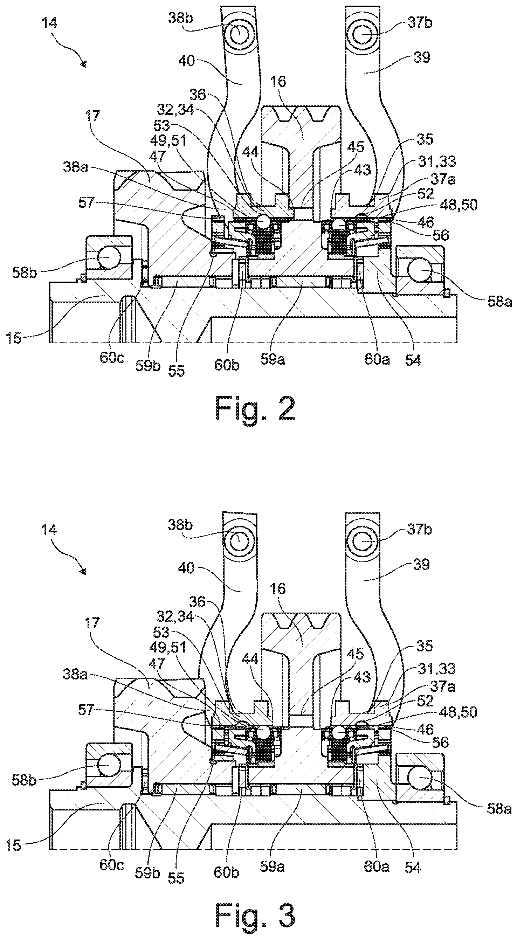

Zum Umsetzen der unterschiedlichen nachstehend beschriebenen Betriebszustände des Antriebssystems 1 ist zwischen der Verbrennungskraftmaschine 5, insbesondere der Ausgangswelle 9, den beiden Elektromotoren 6, 7 mit ihren beiden Rotorwellen 10, 11 und einem Antriebsabschnitt 12 des Antriebssystems 1 eine Getriebeeinheit 13 vorgesehen. Die Getriebeeinheit 13 ist als Schaltgetriebe realisiert und zur Umsetzung der verschiedenen Betriebszustände in verschiedene Schaltstellungen verbringbar. Die Getriebeeinheit 13 ist durch eine erfindungsgemäße Schalteinrichtung 14, die nachfolgend in Bezug auf die Fign. 2 bis 5 näher beschrieben ist, ansteuerbar.

Die Getriebeeinheit 13 weist eine zentral angeordnete Motorwelle 15 (nachstehend vereinfacht als Welle bezeichnet) auf, die mit der Ausgangswelle 9 drehfest gekoppelt ist bzw. unmittelbar durch einen Bereich der Ausgangswelle 9 umgesetzt ist. D.h. die Motorwelle 15 kann integral mit der Ausgangswelle 9 ausgebildet sein. Die Motorwelle 15 ist koaxial zu der Ausgangswelle 9 angeordnet und somit um die gemeinsame erste Drehachse 8a drehbar. Die Getriebeeinheit 13 weist zudem ein erstes Zahnrad 16 auf, welches erste Zahnrad 16 permanent mit der ersten Rotorwelle 10 drehfest verbunden / gekoppelt ist. Das erste Zahnrad 16 ist koaxial zu der Motorwelle 15 angeordnet. Das erste Zahnrad 16 ist als Hohlwellenzahnrad / Hohlwelle ausgebildet und radial von außen auf der Motorwelle 15 drehbar gelagert. Des Weiteren weist die Getriebeeinheit 13 ein zweites Zahnrad 17 auf, welches, ähnlich dem ersten Zahnrad 16, koaxial zu der Motorwelle 15 angeordnet, als Hohlwelle ausgebildet und radial von außen auf der Motorwelle 15 drehbar gelagert ist. Das zweite Zahnrad 17 ist dabei in axialer Richtung der Motorwelle 15, d. h. entlang der ersten Drehachse 8a betrachtet, neben dem ersten Zahnrad 16 angeordnet. Wie in Fig. 1 zu erkennen, ist das zweite Zahnrad 17 über das erste Zahnrad 16 auf der Motorwelle 15 abgestützt. D.h. in radialer Richtung sind die Motorwelle 15, das erste Zahnrad 16 und das zweite Zahnrad 17 in dieser Reihenfolge angeordnet.

Zur drehfesten Verbindung des ersten Zahnrades 16 mit der ersten Rotorwelle 10 ist ein weiteres (drittes) Zahnrad 18 vorgesehen, welches drehfest auf der ersten Rotorwelle 10 angeordnet ist bzw. integral mit der ersten Rotorwelle 10 ausgebildet ist und sich in Zahneingriff mit dem ersten Zahnrad 16 befindet. Die beiden außenverzahnten ersten und dritten Zahnräder 16 und 18 bilden somit einen Stirnradsatz. Insbesondere handelt es sich bei beiden Zahnrädern 16,18 um Stirnräder mit Außenverzahnung. Zudem steht das erste Zahnrad 16 mit einem weiteren (vierten) Zahnrad 19 in Zahneingriff. Auch hierbei handelt es sich um einen Stirnradsatz. Das vierte Zahnrad 19 ist dabei drehfest mit einer einen Klimakompressor 20 antreibenden Kompressorwelle 21 verbunden bzw. integral mit der Kompressorwelle 21 ausgebildet.

In dem bevorzugten Ausführungsbeispiel ist das zweite Zahnrad 17 über ein Zwischenzahnrad 22 mit einer Planetengetriebestufe / einem Planetengetriebe 23 verbunden. Das außenverzahnte zweite Zahnrad 17 bildet somit mit dem ebenfalls außenverzahnten Zwischenzahnrad 22 einen Stirnradsatz. Das außenverzahnte zweite Zahnrad 17 ist somit Bestandteil eines Stirnradsatzes. Die Planetengetriebestufe 23 ist weiter mit der zweiten Rotorwelle 11 rotatorisch verbunden. Wie aus Fig. 1 weiterhin zu erkennen ist, ist das mit dem zweiten Zahnrad 17 kämmende Zwischenzahnrad 22 unmittelbar drehfest mit einem Planetenradträger 24 der Planetengetriebestufe 23 verbunden. Die Planetengetriebestufe 23 der Getriebeeinheit 13 weist zudem auf typische Weise ein Sonnenrad 25 auf, das unmittelbar drehfest mit der zweiten Rotorwelle 11 verbunden ist. Mit dem Sonnenrad 25 befinden sich wiederum mehrere in Umfangsrichtung verteilt angeordnete Planetenräder 26, die auf dem Planetenradträger 24 drehbar aufgenommen sind, in Zahneingriff. Ein mit den Planetenrädern 26 weiterhin in Zahneingriff stehendes Hohlrad 27 wirkt mit einer gehäusefesten bzw. fahrzeugrahmenfesten Bremseinrichtung 28 zusammen, welche in ihrem aktivierten Zustand das Hohlrad 27 relativ zu einem Fahrzeugrahmen festhält und in ihrem deaktivierten Zustand eine freie Verdrehung des Hohlrades 27 gegenüber dem Fahrzeugrahmen ermöglicht, d.h. die Bremseinrichtung 28 gibt das Hohlrad 27 rotatorisch frei.

Des Weiteren ist das Zwischenzahnrad 22 in dem bevorzugten Ausführungsbeispiel zudem in Zahneingriff mit einem Eingangsrad 29 eines drehfest mit der Antriebsachse 3 verbundenen Differentialgetriebes 30. Somit kann das Drehmoment der Verbrennungskraftmaschine 5 bzw. der Elektromotoren 6, 7 über das Zwischenzahnrad 22, das Eingangsrad 29 in das Differentialgetriebe 30 eingeleitet werden, wo es wiederum auf die Antriebsachse 3 verteilt und so auf die Räder 4a, 4b übertragen wird.

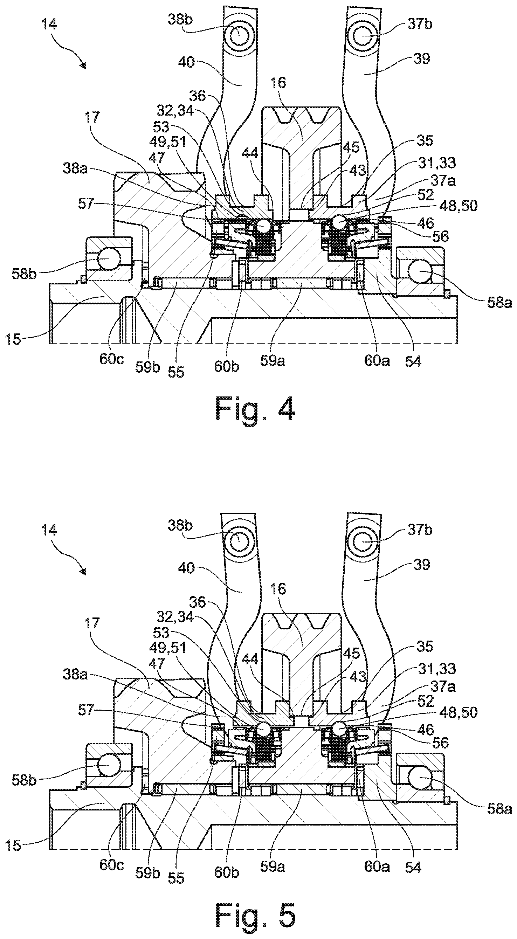

Erfindungsgemäß ist zwischen der Motorwelle 15 und den beiden Rotorwellen 10, 11, nämlich den beiden mit den Rotorwellen 10, 11 gekoppelten Zahnrädern 16 und 17, die Schalteinrichtung 14 wirkend eingesetzt. Die in den Fign. 2 bis 5 näher dargestellte Schalteinrichtung 14 ist prinzipiell derart ausgebildet, dass sie in ihrer ersten Schaltstellung die Motorwelle 15 mit der ersten Rotorwelle 10 rotatorisch koppelt / verbindet, während die zweite Rotorwelle 11 von der Motorwelle 15 (sowie der ersten Rotorwelle 10) rotatorisch entkoppelt ist (Fig. 2). In einer zweiten Schaltstellung der Schalteinrichtung 14 ist die Motorwelle 15 sowohl mit der ersten Rotorwelle 10 als auch mit der zweiten Rotorwelle 11 rotatorisch verbunden / gekoppelt (Fig. 3). In einer dritten Schaltstellung der Schalteinrichtung 14 sind die beiden Rotorwellen 10, 11 miteinander rotatorisch verbunden / gekoppelt, während die Motorwelle 15 von den beiden Rotorwellen 10, 11 rotatorisch entkoppelt ist (Fig. 4). In einer in Fig. 5 gezeigten vierten Schaltstellung sind die beiden Rotorwellen 10, 11 rotatorisch entkoppelt. Zudem sind in der vierten Schaltstellung die beiden rotatorisch entkoppelten Rotorwellen 10, 11 auch rotatorisch von der Motorwelle 15 entkoppelt.

Die Schalteinrichtung 14 ist zumindest teilweise unmittelbar in dem ersten Zahnrad 16 integriert. Wie in Fig. 2 zu erkennen, weist die Schalteinrichtung 14 in dem bevorzugten Ausführungsbeispiel eine erste und eine zweite Schiebehülse 31, 32, welche entlang der zentralen ersten Drehachse 8a axial verschiebbar in dem ersten Zahnrad 16 aufgenommen sind, auf. Durch Verschieben der beiden Schiebehülsen 31, 32 in unterschiedliche, nachstehend beschriebene Verschiebestellungen lassen sich die in den Fign. 2 bis 5 veranschaulichten unterschiedlichen Schaltstellungen der Schalteinrichtung 14 verwirklichen. Mit anderen Worten, weist die Schalteinrichtung 14 zwei über die Schiebehülsen 31, 32 ausgeführten Synchronisierungen auf, mittels welcher durch axiales Verschieben verschiedene Schaltstellungen und damit unterschiedliche Betriebsmodi des Kraftfahrzeugs 2 umgesetzt werden können.

Die Schiebehülsen 31, 32 sind im Wesentlichen baugleich ausgeführt und weisen jeweils einen ringförmigen Grundkörper 33, 34 auf. Wie in Fig. 2 angedeutet und insbesondere in Fig. 3 und 5 zu sehen, sind die beiden Schiebehülsen 31, 32 im Wesentlichen gespiegelt zu einer axialen Mittelfläche des ersten Zahnrads 16 angeordnet. Auf einer Außenumfangsfläche der Grundkörper 33, 34 ist jeweils eine umlaufende Aufnahmekontur 35, 36 ausgebildet, welche, wie in Fig. 2 zu erkennen, eine U-förmige Querschnittsfläche aufweisen. Die Aufnahmekonturen 35, 36 sind dabei zur (formschlüssigen) Aufnahme von ersten Enden 37a, 38a von Hebelelementen 39, 40 ausgestaltet. Zweite Enden 37b, 38b der Hebelelemente 39, 40 wiederum sind jeweils mit einem als Linearmotor umgesetzten Aktuator 41, 42 gekoppelt, so dass die Schiebehülsen 31, 32 durch die Aktuatoren 41, 42 in ihren Verschiebestellungen einstellbar sind. In dem bevorzugten Ausführungsbeispiel ist jedem Hebelelement 39, 40 ein Aktuator 41, 42 zugeordnet. Jedoch ist es auch denkbar, dass die Verschiebestellungen der beiden Schiebehülsen 31, 32 über einen gemeinsamen Aktuator eingestellt werden können. D.h. in der Schalteinrichtung 14 ist ein Aktuator mit beiden zweiten Enden 37b, 38b der Hebelelemente 39, 40 verbunden.

Des Weiteren sind an den beiden Schiebehülsen 31, 32 auf dem ersten Zahnrad 16 zugewandten Seitenflächen jeweils vorsprungartige Eingriffsabschnitte 43, 44 ausgebildet. Wenn die Schiebehülsen 31, 32 in Abhängigkeit der einzustellenden Schaltstellungen der Schalteinrichtung 14 durch die Aktuatoren 41, 42 axial in Richtung zu dem ersten Zahnrad 16 hin verschoben werden, greifen die Eingriffsabschnitte 43, 44 in eine in dem ersten Zahnrad 16 ausgebildete Durchgangsbohrung 45 ein. Auf einer Innenumfangsfläche der Schiebehülsen 31, 32 sind jeweils auf dem ersten Zahnrad 16 abgewandten Seiten als Axialverzahnung / Kerbverzahnung ausgeführte Innenverzahnungen 46, 47 ausgebildet.

In Verbindung mit den Fign. 2 bis 5 ist zudem zu erkennen, dass zur Abstützung bzw. Festlegung der Schiebehülsen 31, 32 in der jeweiligen Verschiebestellung an den Innenumfangsflächen der Schiebehülsen 31, 32 jeweils eine Rastiereinheit 48, 49 vorgesehen ist. Die Rastiereinheiten 48, 49 sind zudem in dem ersten Zahnrad 16 integriert bzw. abgestützt. Die Rastiereinheiten 48, 49 weisen jeweils ein Rastelement 50, 51 auf, die in dem ersten Zahnrad 16 radial verschiebbar angeordnet sind und mit an den Innenumfangsflächen der Schiebehülsen 31, 32 ausgebildeten Rastkonturen 52, 53 greifen. D.h. die Rastelemente 50, 51 stützen die Schiebehülsen 31, 32 in ihren jeweiligen Verschiebestellungen verschiebefest relativ zu dem ersten Zahnrad 16 ab.

Die Schalteinrichtung 14 weist weiterhin ein im Wesentlichen ringförmiges und der ersten Schiebehülse 31 zugeordnetes, erstes Übertragungselement 54 und ein im Wesentlichen ringförmiges und der zweiten Schiebehülse 32 zugeordnetes, zweites Übertragungselement 55 auf. Das erste Übertragungselement 54 ist dabei dauerhaft drehfest auf der Motorwelle 15 angeordnet und hat auf seiner Außenumfangsfläche eine als Axialverzahnung ausgeführte Außenverzahnung 56. Wenn, wie in Fig. 2 zu erkennen, die erste Schiebehülse 31 durch den Aktuator 41 in axialer Richtung weg von dem ersten Zahnrad 16 verschoben wird, wird die Innenverzahnung 46 der ersten Schiebehülse 31 mit der Außenverzahnung 56 des ersten Übertragungselements 54 in Zahneingriff gebracht, wodurch die Motorwelle 15 drehfest mit dem ersten Zahnrad 16 gekoppelt wird.

Das zweite Übertragungselement 55 ist dauerhaft drehfest auf dem zweiten Zahnrad 17 angeordnet. Analog zu dem ersten Übertragungselement 54, weist auch das zweite Übertragungselement 55 auf seiner Außenumfangsfläche eine als Axialverzahnung ausgeführte Außenverzahnung 57 auf. Die Außenverzahnung 57 kann dabei zur drehfesten Kopplung des ersten Zahnrads 16 mit dem zweiten Zahnrad 17 durch Verschieben der zweiten Schiebehülse 32 mittels dem Aktuator 42 in Zahneingriff mit der Innenverzahnung 47 der zweiten Schiebehülse 32 gebracht werden.

Wie zudem in den Fign. 2 bis 5 erkennbar, ist in dem bevorzugten Ausführungsbeispiel die Motorwelle 15 auf typische Weise relativ zu einem Gehäuse des Antriebssystems 1 drehbar gelagert. Zwischen zwei als Schrägkugellager ausgeführten Stützlagern 58a, 58b, an denen die Motorwelle 15 relativ zu dem Gehäuse abgestützt ist, sind die beiden ersten und zweiten Zahnräder 16, 17 relativ verdrehbar auf der Außenseite der Motorwelle 15 über als Nadellager ausgeführte Radiallager 59a, 59b gelagert. Um in einem entkoppelten Zustand rotatorische Relativbewegungen zwischen dem ersten Zahnrad 16, dem zweiten Zahnrad 17 und der Motorwelle 15 zu ermöglichen, sind zudem zwischen axialen Anstoßflächen als Nadellager ausgeführte Axiallager 60a, 60b, 60c angeordnet. D.h. das Axiallager 60a erlaubt die rotatorische Relativbewegung zwischen der Motorwelle 15, insbesondere dem ersten Übertragungselement 54, und dem ersten Zahnrad 16, das Axiallager 60b die rotatorische Relativbewegung zwischen dem ersten Zahnrad 16 und dem zweiten Zahnrad 17 und das Axiallager 60c ermöglicht die rotatorische Relativbewegung zwischen dem zweiten Zahnrad 17 und der Motorwelle 15.

Vorstehend wurde mit Bezug zu Fig. 2 der Aufbau und die Wirkungsweise der Schalteinrichtung 14 beschrieben. Nachfolgend soll nun auf die unterschiedlichen, mit der Schalteinrichtung 14 umsetzbaren Schaltstellungen eingegangen werden.

In Fig. 2 ist dabei, wie vorstehend erwähnt, die Schalteinrichtung 14 in der ersten Schaltstellung dargestellt. Die erste Schiebehülse 31 ist hierbei in Richtung weg von dem ersten Zahnrad 16 (in Fig. 2 bis 5 nach rechts) verschoben, so dass die Innenverzahnung 46 der ersten Schiebehülse 31 in Zahneingriff mit der Außenverzahnung 56 des ersten Übertragungselements 54 steht. Somit sind in der ersten Schaltstellung die Motorwelle 15 und das erste Zahnrad 16 drehfest gekoppelt. Die zweite Schiebehülse 32 befindet sich, wie in Fig. 2 zu erkennen, in einer dem Zahnrad 16 zugewandten Position, in welcher der Eingriffsabschnitt 44 in die Durchgangsbohrung 45 greift und die Innenverzahnung 47 somit nicht in Zahneingriff mit der Außenverzahnung 57 des zweiten Übertragungselements 55 steht. D.h. in der ersten Schaltstellung sind das erste Zahnrad 16 und das zweite Zahnrad 17 rotatorisch voneinander entkoppelt. Das Rastelement 51 ist dabei in der Rastkontur 53 verrastet und hält so die zweite Schiebehülse 32 in der dem Zahnrad 16 zugewandten Position. Durch die drehfeste Kopplung der Motorwelle 15 und dem ersten Zahnrad 16 sind in der ersten Schaltstellung die Verbrennungskraftmaschine 5 drehfest mit dem ersten Elektromotor 6 wirkverbunden, wodurch ein serieller Betriebsmodus / Fahrbetrieb umgesetzt werden kann. In diesem seriellen Betriebsmodus treibt die Verbrennungskraftmaschine 5 somit den ersten Elektromotor 6 an, der wiederum elektrisch den zweiten Elektromotor 7 mit Antriebsenergie versorgt. Der zweite Elektromotor 7 bringt ein Drehmoment auf die Räder 4a, 4b auf. Der erste Elektromotor 6 dient dabei zur Erzeugung einer entsprechenden elektrischen Antriebsenergie für den zweiten Elektromotor 7, die in einer Batterie (in Fig. 1 nicht dargestellt) zwischengespeichert wird. Neben dem seriellen Betriebsmodus kann mit der ersten Schaltstellung auch ein rein elektrischer Betriebsmodus, ein Motorstart-Betriebsmodus, ein Standladen-Betriebsmodus, ein Betriebsmodus für rein elektrisches Rückwärtsfahren und ein Rekuperations-Betriebsmodus realisiert werden.

Fig. 3 zeigt die zweite Schaltstellung der Schalteinrichtung 14. Dabei sind die erste Schiebehülse 31 und die zweite Schiebehülse 32 jeweils so durch die Aktuatoren 41, 42 verschoben / ausgelenkt, dass die Innenverzahnungen 46, 47 jeweils mit den Au-βenverzahnungen 56, 57 des ersten Übertragungselements 54 bzw. des zweiten Übertragungselements 55 in Zahneingriff stehen. D.h. in der zweiten Schaltstellung ist die Motorwelle 15 drehfest mit dem ersten Zahnrad 16 verbunden, welches wiederum drehfest mit dem zweiten Zahnrad 17 verbunden ist, was die Realisierung eines parallelen Betriebsmodus sowie eines Boost-Betriebsmodus durch den ersten Elektromotor 6 ermöglicht.

Ferner ist in Fig. 4 die dritte Schaltstellung der Schalteinrichtung 14 abgebildet, bei welcher die Motorwelle 15 durch axiales Verlagern der ersten Schiebehülse 31 in Richtung hin zu dem ersten Zahnrad 16 rotatorisch von dem ersten Zahnrad 16 entkoppelt ist und das erste Zahnrad 16 durch Verschieben der zweiten Schiebehülse 32 hin zu dem zweiten Zahnrad 17 drehfest mit dem zweiten Zahnrad 17 gekoppelt ist. D.h. die Innenverzahnung 46 der ersten Schiebehülse 31 steht nicht in Zahneingriff mit der Außenverzahnung 56 des ersten Übertragungselements 54, wohingegen die Innenverzahnung 47 der zweiten Schiebehülse 32 in Zahneingriff mit der Außenverzahnung 57 des zweiten Übertragungselements 55 steht. Das Rastelement 50 der Rastiereinheit 48 ist dabei in der Rastkontur 52 verrastet und hält die erste Schiebehülse 31 in der dem ersten Zahnrad 16 zugewandten Position, in welcher der Eingriffsabschnitt 43 in die Durchgangsbohrung 45 greift. Mit der dritten Schaltstellung kann somit ein EV-Boost-Betriebsmodus sowie ein Anfahr-Boost-Betriebsmodus für Vorwärts- und Rückwärtsfahrt umgesetzt werden.

Darüber hinaus zeigt Fig. 5 die vierte Schaltstellung, bei welcher sich die erste Schiebehülse 31 und die zweite Schiebehülse 32 jeweils in ihren dem ersten Zahnrad 16 zugewandten Positionen befinden, so dass die Eingriffsabschnitte 43, 44 in die Durchgangsbohrung 45 greifen und die Rastelemente 50, 51 in den Rastkonturen 52, 53 verrasten. Somit stehen die Innenverzahnungen 46, 47 der Schiebehülsen 31, 32 nicht mit den entsprechenden Außenverzahnungen 56, 57 der Übertragungselemente 54, 55 in Zahneingriff und die Motorwelle 15, das erste Zahnrad 16 und das zweite Zahnrad 17 sind rotatorisch voneinander entkoppelt. In der vierten Schaltstellung kann dadurch bei abgekoppelter bzw. ausgeschalteter Verbrennungskraftmaschine 5 ein Standklimatisierungs-Betriebsmodus realisiert werden.

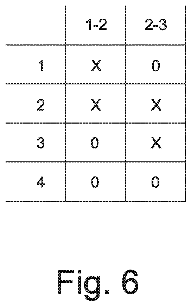

Fig. 6 zeigt tabellarisch den Zusammenhang der drehfesten Verbindung zwischen der Welle 15 und dem ersten Zahnrad 16, der drehfesten Verbindung zwischen dem ersten Zahnrad 16 und dem zweiten Zahnrad 17 und der unterschiedlichen Schaltstellungen. Dabei sind in der ersten Spalte die unterschiedlichen Schaltstellungen 1-4 aufgelistet. In der zweiten bzw. dritten Spalte ist aufgeführt, ob in der jeweiligen Schaltstellung die Verbindung 1-2 , d.h. die drehfeste Verbindung zwischen Welle 15 und erstem Zahnrad 16, bzw. die Verbindung 2-3 , d.h. die drehfeste Verbindung zwischen erstem Zahnrad 16 und dem zweiten Zahnrad 17, hergestellt oder gelöst ist. Dabei beschreibt X eine hergestellte drehfeste Verbindung und 0 eine gelöste Verbindung bzw. keine Verbindung. D.h. in der ersten Schaltstellung sind, wie vorstehend beschrieben, die Welle 15 und das erste Zahnrad 16 drehfest verbunden, während das erste Zahnrad 16 und das zweite Zahnrad 17 rotatorisch entkoppelt sind. Insbesondere ist in Fig. 6 zu erkennen, dass die Schalteinrichtung 14 ein direktes Umschalten zwischen der ersten, dritten und vierten Schaltstellung erlaubt, ohne (zumindest kurzfristig) in die zweite Schaltstellung schalten zu müssen.

In anderen Worten ausgedrückt, umfasst die Schalteinrichtung 14 die zwei Zahnräder / Losräder 16, 17 und die Welle 15. Dabei verbindet das kleinere der beiden Losräder 17 (in Fign. 2 bis 5 links) das System einer Eingangswelle der Getriebeeinheit 13 mit dem Abtrieb des Fahrzeugs 2. Das größere der beiden Losräder 16 (in Fign. 2 bis 5 rechts) stellt die Verbindung zum Generator 6 da. Erfindungsgemäß werden anstelle einer Doppelsynchronisierung die zwei einfach wirkenden Synchronisierungen 31, 32 verwendet. Die rechte der beiden Synchronisierungen 31 verbindet das rechte Zahnrad 16 mit der Welle 15. Die linke der beiden Synchronisierungen 32 hingegen verbindet das linke Zahnrad 17 mit dem rechten Zahnrad 16. Die beiden Synchronisierungen 31, 32 können einzeln betätigt werden. Zudem ist es aber auch denkbar, die Betätigung über einen einzelnen Aktor mit einer entsprechenden Mechanik darzustellen.

### Bezugszeichenliste

- 1: Antriebssystem
- 2: Kraftfahrzeug
- 3: Antriebsachse
- 4a, 4b: Rad
- 5: Verbrennungskraftmaschine
- 6: erster Elektromotor
- 7: zweiter Elektromotor
- 8a, 8b, 8c: Drehachse
- 9: Ausgangswelle
- 10: erste Rotorwelle
- 11: zweite Rotorwelle
- 12: Antriebsabschnitt
- 13: Getriebeeinheit
- 14: Schalteinrichtung
- 15: Motorwelle
- 16: erstes Zahnrad
- 17: zweites Zahnrad
- 18: drittes Zahnrad
- 19: viertes Zahnrad
- 20: Klimakompressor
- 21: Kompressorwelle
- 22: Zwischenzahnrad
- 23: Planetengetriebestufe
- 24: Planetenradträger
- 25: Sonnenrad
- 26: Planetenrad
- 27: Hohlrad
- 28: Bremseinrichtung
- 29: Eingangsrad
- 30: Differentialgetriebe
- 31: erste Schiebehülse
- 32: zweite Schiebehülse
- 33, 34: Grundkörper
- 35, 36: Aufnahmekontur
- 37a, 38a: erstes Ende
- 37b, 38b: zweites Ende
- 39, 40: Hebelelement
- 41, 42: Aktuator
- 43, 44: Eingriffsabschnitt
- 45: Durchgangsbohrung
- 46,47: Innenverzahnung
- 48, 49: Rastiereinheit
- 50,51: Rastelement
- 52, 53: Rastkontur
- 54: erste Übertragungselement
- 55: zweites Übertragungselement
- 56,57: Außenverzahnung
- 58a, 58b: Stützlager
- 59a, 59b: Radiallager
- 60a, 60b, 60c: Axiallager

## Patentansprüche

1. Schalteinrichtung (14) für ein hybrides Antriebssystem (1) eines Kraftfahrzeuges (2), mit einer zentral angeordneten Welle (15) einem relativ zu der Welle (15) verdrehbar gelagerten ersten Zahnrad (16) und einem relativ zu der Welle (15) verdrehbar gelagerten, entlang der Welle (15) versetzt zu dem ersten Zahnrad (16) angeordneten zweiten Zahnrad (17), wobei jedem Zahnrad (16, 17) eine Schiebehülse (31, 32) zugeordnet ist, welche Schiebehülsen (31, 32) derart ausgebildet sind, dass sie in einer ersten Verschiebestellung die Welle (15) drehfest mit dem ersten Zahnrad (16) verbinden, während das zweite Zahnrad (17) rotatorisch von der Welle (15) entkoppelt ist, in einer zweiten Verschiebestellung die Welle (15) sowohl mit dem ersten Zahnrad (16) als auch mit dem zweiten Zahnrad (17) rotatorisch verbinden, **dadurch gekennzeichnet, dass** die Schiebehülsen (31, 32) in einer dritten Verschiebestellung die beiden Zahnräder (16, 17) rotatorisch miteinander verbinden, während die Welle (15) von den beiden Zahnrädern (16, 17) rotatorisch entkoppelt ist und in einer vierten Verschiebestellung die beiden Zahnräder (16, 17) voneinander sowie die Welle (15) von den beiden Zahnrädern (16, 17) rotatorisch entkoppeln.

2. Schalteinrichtung (14) nach Anspruch 1, **dadurch gekennzeichnet, dass** jede Schiebehülse (31, 32) eine, vorzugsweise als Axialverzahnung ausgeführte, Innenverzahnung (46, 47) aufweist.

3. Schalteinrichtung (14) nach Anspruch 2, **dadurch gekennzeichnet, dass** zur drehfesten Verbindung der Welle (15) und des ersten Zahnrads (16) eine an einem ersten Übertragungselement (54), vorzugsweise als Axialverzahnung, ausgebildete Außenverzahnung (56) mit der Innenverzahnung (46) der ersten Schiebehülse (31) in Zahneingriff steht.

4. Schalteinrichtung (14) nach Anspruch 2 oder 3, **dadurch gekennzeichnet, dass** zur drehfesten Verbindung des ersten Zahnrads (16) und des zweiten Zahnrads (17) eine an einem zweiten Übertragungselement (55), vorzugsweise als Axialverzahnung, ausgebildete Außenverzahnung (57) mit der Innenverzahnung (47) der zweiten Schiebehülse (32) in Zahneingriff steht.

5. Schalteinrichtung (14) nach einem der Ansprüche 1 bis 4, **dadurch gekennzeichnet, dass** jede Schiebehülse (31, 32) eine Rastkontur (52, 53) aufweist, in welche Rastkontur (52, 53) jeweils ein Rastelement (50, 51) in der jeweiligen Verschiebestellung blockierend eingreift.

6. Schalteinrichtung (14) nach einem der Ansprüche 1 bis 5, **dadurch gekennzeichnet, dass** zumindest ein Aktuator (41, 42) über einen Hebelmechanismus auf die jeweilige Schiebehülse (31, 32) verschiebend einwirkt.

7. Schalteinrichtung (14) nach Anspruch 6, **dadurch gekennzeichnet, dass** jeweils ein Hebelelement (39, 40) des Hebelmechanismus mit einem ersten Ende (37a, 38a) in eine Aufnahmekontur (35, 36) an der Schiebehülse (31, 32) eingreift und mit einem dem ersten Ende (37a, 38a) gegenüberliegenden zweiten Ende (37b, 38b) durch den zumindest einen Aktuator (41, 42) zum Schwenken beaufschlagbar ist.

8. Schalteinrichtung (14) nach einem der Ansprüche 1 bis 7, **dadurch gekennzeichnet, dass** das erste Zahnrad (16) in einer axialen Richtung der Welle (15) über ein Axiallager (60a) an der Welle (15) abgestützt ist, das zweite Zahnrad (17) in der axialen Richtung über ein Axiallager (60b) an dem ersten Zahnrad (16) und über ein Axiallager (60c) an der Welle (15) abgestützt ist.

9. Antriebssystem (1) für ein hybrides Kraftfahrzeug (2), mit einer mit einer Ausgangwelle (9) einer Verbrennungskraftmaschine (5) rotatorisch koppelbaren oder gekoppelten Motorwelle (15), einem eine erste Rotorwelle (10) aufinreisenden, in einem Hauptbetriebszustand als Generator betriebenen ersten Elektromotor (6), einem eine radial versetzt zu der ersten Rotorwelle (10) angeordnete zweite Rotorwelle (11) aufweisenden, in dem Hauptbetriebszustand als Antriebsmotor betriebenen zweiten Elektromotor (7), einem mit der zweiten Rotorwelle (11) rotatorisch verbundenen und zumindest einem Rad (4a, 4b) des Kraftfahrzeuges (2) rotatorisch verbindbaren Antriebsabschnitt (12) und einer zwischen der Motorwelle (15), den beiden Rotorwellen (10, 11) und dem Antriebsabschnitt (12) wirkend eingesetzten, schaltbaren Getriebeeinheit (13), wobei eine einen Betriebsmodus des Antriebssystems (1) steuernde und nach einem der Ansprüche 1 bis 8 ausgebildete Schalteinrichtung (14) zwischen der Motorwelle (15), einem mit der ersten Rotorwelle (10) permanent rotatorisch gekoppelten ersten Zahnrad (16) und einem mit der zweiten Rotorwelle (11) über eine zusätzliche Planetengetriebestufe (23) permanent rotatorisch gekoppelten zweiten Zahnrad (17) wirkend eingesetzt ist.

10. Kraftfahrzeug (2) mit einem Antriebssystem (1) nach Anspruch 9, wobei der Antriebsabschnitt (12) mit den Rädern (4a, 4b) des Kraftfahrzeuges (2) rotatorisch gekoppelt ist.

## Claims

1. A switching device (14) for a hybrid drive system (1) of a motor vehicle (2), having a centrally arranged shaft (15), a first gearwheel (16) rotatably mounted relative to the shaft (15) and a second gearwheel (17) which is rotatably mounted relative to the shaft (15) and arranged along the shaft (15) offset with respect to the first gearwheel (16), wherein each gearwheel (16, 17) is associated with a sliding sleeve (31, 32), which sliding sleeves (31, 32) are designed in such a manner that in a first displacement position they connect the shaft (15) in a non-rotatable manner to the first gearwheel (16), while the second gearwheel (17) is rotationally decoupled from the shaft (15), and in a second displacement position they rotationally connect the shaft (15) both to the first gearwheel (16) and to the second gearwheel (17), **characterised in that** the sliding sleeves (31, 32) in a third displacement position rotationally connect the two gearwheels (16, 17) to each other, while the shaft (15) is rotationally decoupled from the two gearwheels (16, 17), and in a fourth displacement position they rotationally decouple the two gearwheels (16, 17) from each other and the shaft (15) from the two gearwheels (16, 17).

2. The switching device (14) according to claim 1, **characterised in that** each sliding sleeve (31, 32) has an internal toothing (46, 47), preferably designed as an axial toothing.

3. The switching device (14) according to claim 2, **characterised in that** for the non-rotatable connection of the shaft (15) and the first gearwheel (16), an external toothing (56) configured, preferably as an axial toothing, on a first transmission element (54) is in toothed engagement with the internal toothing (46) of the first sliding sleeve (31).

4. The switching device (14) according to claim 2 or 3, **characterised in that** for the non-rotatable connection of the first gearwheel (16) and the second gearwheel (17), an external toothing (57) configured, preferably as an axial toothing, on a second transmission element (55) is in toothed engagement with the internal toothing (47) of the second sliding sleeve (32).

5. The switching device (14) according to any one of claims 1 to 4, **characterised in that** each sliding sleeve (31, 32) has a latching contour (52, 53), in which latching contour (52, 53) a latching element (50, 51) engages in each case in a blocking manner in the displacement position.

6. The switching device (14) according to any one of claims 1 to 5, **characterised in that** at least one actuator (41, 42) acts in a displacing manner on the respective sliding sleeve (31, 32) via a lever mechanism.

7. The switching device (14) according to claim 6, **characterised in that** a lever element (39, 40) of the lever mechanism with a first end (37a, 38a) engages in each case in a receiving contour (35, 36) on the sliding sleeve (31, 32) and with a second end (37b, 38b) opposite the first end (37a, 38a) can be acted upon by the at least one actuator (41, 42) so as to pivot.

8. The switching device (14) according to any one of claims 1 to 7, **characterised in that** the first gearwheel (16) is supported in an axial direction of the shaft (15) via an axial bearing (60a) on the shaft (15), the second gear (17) is supported in the axial direction via an axial bearing (60b) on the first gearwheel (16) and via an axial bearing (60c) on the shaft (15).

9. A drive system (1) for a hybrid motor vehicle (2), having a motor shaft (15) that can be or is coupled rotationally to an output shaft (9) of an internal combustion engine (5), a first electric motor (6) which has a first rotor shaft (10) and is operated as a generator in a main operating state, a second electric motor (7) which has a second rotor shaft (11) arranged radially offset with respect to the first rotor shaft (10) and which is operated as a drive motor in the main operating state, a drive portion (12) which is rotationally connected to the second rotor shaft (11) and is rotationally connectable to at least one wheel (4a, 4b) of the motor vehicle (2), and a switchable transmission unit (13) which is inserted to act between the motor shaft (15), the two rotor shafts (10, 11) and the drive portion (12), wherein a switching device (14) which controls an operating mode of the drive system (1) and which is designed according to any one of claims 1 to 8 is inserted to act between the motor shaft (15), a first gearwheel (16) permanently rotationally coupled to the first rotor shaft (10) and a second gearwheel (17) permanently rotationally coupled to the second rotor shaft (11) via an additional planetary gear stage (23).

10. A motor vehicle (2) having a drive system (1) according to claim 9, wherein the drive portion (12) is rotationally coupled to the wheels (4a, 4b) of the motor vehicle (2).

## Revendications

1. Dispositif sélecteur (14) pour un système de conduite hybride (1) d'un véhicule à moteur (2), comprenant un arbre (15) disposé au centre, une première roue dentée (16) montée rotative par rapport à l'arbre (15) et une seconde roue dentée (17) montée rotative par rapport à l'arbre (15) et disposée le long de l'arbre (15) de manière décalée par rapport à la première roue dentée (16), un manchon coulissant (31, 32) étant associé à chaque roue dentée (16, 17), lesquels manchons coulissants (31, 32) sont conçus de façon que, dans une première position de déplacement, ils relient l'arbre (15) à la première roue dentée (16) d'une manière solidaire en rotation, tandis que la seconde roue dentée (17) est désaccouplée en rotation de l'arbre (15), dans une deuxième position de déplacement, ils relient l'arbre (15) en rotation aussi bien à la première roue dentée (16) qu'à la seconde roue dentée (17), **caractérisé en ce que** les manchons coulissants (31, 32) relient les deux roues dentées (16, 17) l'une à l'autre en rotation dans une troisième position de déplacement, tandis que l'arbre (15) est désaccouplé en rotation des deux roues dentées (16, 17) et dans une quatrième position de déplacement, désaccouplent en rotation les deux roues dentées (16, 17) l'une de l'autre et l'arbre (15) des deux roues dentées (16, 17).

2. Dispositif sélecteur (14) selon la revendication 1, **caractérisé en ce que** chaque manchon coulissant (31, 32) présente une denture intérieure (46, 47), de préférence réalisée sous forme de denture axiale.

3. Dispositif sélecteur (14) selon la revendication 2, **caractérisé en ce que** pour la liaison solidaire en rotation de l'arbre (15) et de la première roue dentée (16), une denture extérieure (56) conçue sur un premier élément de transmission (54), de préférence comme denture axiale, est engrenée avec la denture intérieure (46) du premier manchon coulissant (31).

4. Dispositif sélecteur (14) selon la revendication 2 ou 3, **caractérisé en ce que** pour la liaison solidaire en rotation de la première roue dentée (16) et de la seconde roue dentée (17), une denture extérieure (57) conçue sur un second élément de transmission (55), de préférence en tant que denture axiale, est engrenée avec la denture intérieure (47) du second manchon coulissant (32).

5. Dispositif sélecteur (14) selon l'une quelconque des revendications 1 à 4, **caractérisé en ce que** chaque manchon coulissant (31, 32) présente un contour d'encliquetage (52, 53), contour d'encliquetage (52, 53) dans lequel vient en prise respectivement un élément d'encliquetage (50, 51) en le bloquant dans la position de déplacement respective.

6. Dispositif sélecteur (14) selon l'une quelconque des revendications 1 à 5, **caractérisé en ce qu'**au moins un actionneur (41, 42) exerce un déplacement sur le manchon coulissant (31, 32) respectif par l'intermédiaire d'un mécanisme de levier.

7. Dispositif sélecteur (14) selon la revendication 6, **caractérisé en ce que** respectivement un élément de levier (39, 40) du mécanisme de levier vient en prise avec une première extrémité (37a, 38a) dans un contour de réception (35, 36) sur le manchon coulissant (31, 32) et peut être sollicité par une seconde extrémité (37b, 38b) opposée à la première extrémité (37a, 38a) par l'au moins un actionneur (41, 42) pour pivoter.

8. Dispositif sélecteur (14) selon l'une quelconque des revendications 1 à 7, **caractérisé en ce que** la première roue dentée (16) est supportée dans une direction axiale de l'arbre (15) par l'intermédiaire d'un palier axial (60a) sur l'arbre (15), la seconde roue dentée (17) est supportée dans la direction axiale par l'intermédiaire d'un palier axial (60b) sur la première roue dentée (16) et par l'intermédiaire d'un palier axial (60c) sur l'arbre (15).

9. Système de conduite (1) pour véhicule à moteur hybride (2), comprenant un arbre moteur (15) pouvant être accouplé ou étant accouplé en rotation à un arbre de sortie (9) d'un moteur à combustion interne (5), un premier moteur électrique (6) présentant un premier arbre de rotor (10) et fonctionnant comme générateur dans un état de fonctionnement principal, un second moteur électrique (7) présentant un second arbre de rotor (11) qui est disposé de manière radialement décalée par rapport au premier arbre de rotor (10) et fonctionnant, dans l'état de fonctionnement principal, comme moteur de conduite, une section de conduite (12) reliée en rotation au second arbre de rotor (11) et pouvant être reliée rotative à au moins une roue (4a, 4b) du véhicule à moteur (2) et une unité de transmission (13) commutable, insérée de manière à agir entre l'arbre moteur (15), les deux arbres de rotor (10, 11) et la section de conduite (12), un dispositif sélecteur (14) commandant un mode de fonctionnement du système de conduite (1) et conçu selon l'une quelconque des revendications 1 à 8, étant utilisé pour agir entre l'arbre moteur (15), une première roue dentée (16) accouplée en rotation de manière permanente au premier arbre de rotor (10) et une seconde roue dentée (17) accouplée en rotation de manière permanente au second arbre de rotor (11) par l'intermédiaire d'un étage d'engrenage planétaire (23) supplémentaire.

10. Véhicule à moteur (2) comprenant un système de conduite (1) selon la revendication 9, la section de conduite (12) étant accouplée en rotation aux roues (4a, 4b) du véhicule à moteur (2).
